# EUROPEAN PATENT APPLICATION

(11) **EP 4 756 409 A1**
(43) Date of publication of application: **10.06.2026**
(21) Application number: 24217683.2
(22) Date of filing: 05.12.2024
(51) Int. Cl.: G01N 21/84, G01M 3/00, G01N 21/90, G01N 21/91, G01N 21/894, B07C 5/02, B05B 13/02, B65D 1/34, B65D 81/34

(54) **SYSTEM AND METHOD FOR DETECTING PRODUCT DEFECTS IN A COMPRESSION MOLDING TOOL**

(71) Applicant: Rottneros Packaging AB, 686 31 Sunne (SE)
(72) Inventor: CARLMAN, Pär, SE-686 95 VÄSTRA ÄMTERVIK (SE); TSUJI, Yukari, SE-685 32 TORSBY (SE)
(74) Representative: Kransell & Wennborg KB

(57) **Abstract**

A defect detection system (100) for a compression molding tool (102), the system comprising: a wet treatment station (104) configured to receive a laminated molded fibrous pulp product (202) from the compression molding tool, the wet treatment station being configured to deposit a liquid on a laminated surface of the product; and an inspection station (106) configured to receive the product from the wet treatment station, the inspection station being configured to acquire an image of the product, and to automatically analyze the acquired image to detect a defect in a lamination layer of the product.

## Description

### Field of the Invention

The present invention relates to a system and method for detecting defects in a fibrous pulp product manufactured in a compression molding tool. In particular, the present invention relates to a system and method for detecting lamination defects such as pinholes using a visual inspection system.

### Background of the Invention

In the food packaging industry, there is a growing shift away from single-use plastic containers toward more sustainable alternatives made from renewable and recyclable materials. Traditional plastic packaging materials present certain drawbacks, including environmental persistence and limited suitability for use in conventional ovens. Additionally, improper disposal of plastic packaging can contribute to environmental pollution, further motivating the search for eco-friendly solutions.

Molded fibrous pulp containers, produced through compression molding, have emerged as a promising alternative to plastic and aluminum containers. Pulp-based containers can be made from renewable and recycled materials, and they are themselves recyclable after use. Additionally, molded pulp containers can be designed for both cold and heated food storage, offering versatility in a variety of applications, including use in microwave ovens and conventional ovens. As such, molded pulp containers offer a more sustainable option for food packaging.

However, ensuring the quality of laminated molded fibrous pulp products presents certain challenges. Defects such as pinholes or surface irregularities in the lamination can compromise the container's performance, affecting its durability, appearance, or recyclability. Reliable detection of such defects is important to maintain high product quality and to support the transition from traditional plastic and aluminum packaging to fiber-based alternatives.

While various methods exist for detecting defects in laminated molded pulp products, improvements in detection accuracy and efficiency continue to be of interest. In particular, automated systems that can detect defects in the lamination, such as small surface imperfections, would help manufacturers ensure consistent product quality. Such systems could provide valuable real-time feedback during the manufacturing process, allowing for timely correction of defects and reducing material waste.

In view of these considerations, there is a need for systems and methods that facilitate the accurate detection of defects in laminated molded fibrous pulp products.

### Summary

In view of above-mentioned and other drawbacks of the prior art, it is an object of the present invention to provide an improved system and method for defect detection in compression molded fibrous pulp products.

According to a first aspect of the invention, there is provided a defect detection system for a compression molding tool, the system comprising: a wet treatment station configured to receive a laminated molded fibrous pulp product from the compression molding tool, the wet treatment station being configured to deposit a liquid on a laminated surface of the product; and an inspection station configured to receive the product from the wet treatment station, the inspection station being configured to acquire an image of the product, and to automatically analyze the acquired image to detect a defect in a lamination layer of the product.

The laminated molded fibrous pulp product manufactured by the compression molding tool can in the present context be understood to be a container in the form of a tray having a floor portion and a number of sidewalls so that it can contain a product such as a food product. The manufactured container may also have a substantially horizontal upper flange extending outwards from the sidewalls. Containers and trays for food packaging typically comprise four sidewalls providing a rectangular container, but other shapes are not excluded from being manufactured using the described tool. A tray may also be referred to as a container, box, carton, package, and the like.

The present invention is based on the realization that automated defect detection in laminated molded fibrous pulp products can be improved by incorporating a wet treatment station and an inspection station capable of automatically acquiring and analyzing images of the product. The liquid deposited on the laminated surface penetrates pinholes and other types of openings in the lamination layer, and the liquid is subsequently absorbed by the fibrous pulp product which typically becomes darker when wet, making the defects easier to detect through visual inspection. The described system thereby improves the accuracy in detection of defects, such as pinholes or surface irregularities, which are often difficult or time consuming to identify through manual inspection. Moreover, the use of a wet treatment station to enhance the visibility of defects makes it possible to detect smaller defects without resorting to highly advanced image acquisition systems.

Automated image acquisition and analysis further allows for near real-time defect identification immediately after the wet treatment process, making it possible to quickly address quality issues in the forming or lamination process, thereby reducing waste since the process may be adjusted as soon as defects are detected, and reducing the risk of defective products advancing further in the manufacturing process.

According to an example embodiment, the wet treatment station is configured to deposit a colored liquid. The use of a colored liquid enhances the contrast on the laminated surface, making defects more visible during the inspection process. An increased visibility in turn allows the inspection station to better distinguish between areas of the product with and without defects, improving the accuracy of defect detection and reducing the likelihood of false negatives.

According to an example embodiment, the wet treatment station is configured to deposit a liquid having a viscosity lower than the viscosity of water. By using a low-viscosity liquid, the system ensures better penetration into small defects, such as pinholes or cracks, in the lamination, further increasing the likelihood that defects will be highlighted and detected during image analysis, thereby improving the sensitivity of the inspection process. Lower-viscosity liquids can also spread more evenly across the surface to provide uniform coverage.

According to an example embodiment, the wet treatment station is configured to deposit a methylated spirit. Using methylated spirit as the liquid offers several benefits including rapid evaporation and good surface coverage. This helps to avoid excessive moisture on the product while still allowing for defects to be highlighted for inspection. Additionally, the chemical properties of methylated spirits can enhance the visibility of defects to make the overall inspection process more efficient.

According to an example embodiment, the wet treatment station comprises a spray dispenser configured to spray the liquid on a laminated surface of the product. A spray dispenser provides an even and consistent application of the liquid across the laminated surface. The uniform distribution in turn enhances the detection process by ensuring that all laminated areas of the product are covered and that defects are not missed due to uneven liquid application. Spray dispensing is also an efficient method, allowing high throughput without compromising detection quality.

According to an example embodiment, the spray dispenser is configured to spray the liquid on an entire laminated area of the product, thereby ensuring full coverage for detecting defects across the entire surface, not just in localized areas. The probability of identifying defects that could otherwise go undetected in parts of the product is thereby increased.

According to an example embodiment, the inspection station is configured to communicate information indicative of properties of at least one detected defect in a laminated molded fibrous pulp product to a lamination station of the compression molding tool. The ability to communicate defect information directly to the lamination station allows for real-time feedback and potential corrective actions. Real-time feedback may enhance production efficiency by enabling adjustments to the lamination process based on detected defects, which can improve product quality and reduce waste.

According to a second aspect of the invention, there is provided a method of detecting defects in a laminated molded fibrous pulp product formed in a compression molding tool, the method comprising: in a wet treatment station, depositing a liquid on a surface of a laminated molded fibrous pulp product formed in the compression molding tool; and in an inspection station, acquiring an image of the product, and automatically analyzing the acquired image to detect a defect in the lamination.

According to an example embodiment, the method further comprises automatically analyzing the image using an image processing tool to detect a defect corresponding to a predetermined definition of a defect, and if a defect is detected, providing a signal indicative of the defect in the laminated molded fibrous pulp product. Automating image analysis using a predefined defect definition ensures consistent and accurate detection, reducing the variability associated with manual inspection. By providing a signal when a defect is detected, the system enables rapid feedback and corrective actions, improving both process efficiency and final product quality.

A signal indicative of the defect can take various forms depending on the system configuration. In automated production lines, the signal may be a digital output sent to a control system automatically adjusting the process, or halting production. Detection of a defect could also trigger a visual or audio alert, notifying operators of defects, or produce a graphical display on a monitor, showing the location and nature of the defect for manual review.

Alternatively, or in combination, the signal could contribute to data logging or statistical reporting, recording defect details for later analysis and quality control to helps track production trends. Additionally, the signal might serve as part of a feedback loop, allowing real-time adjustments to upstream processes, such as modifying molding parameters, to prevent future defects.

According to an example embodiment, the method further comprises defining a defect as an area exhibiting a contrast difference between the laminated surface and a defect area that exceeds a predetermined contrast threshold. Using a contrast threshold to define defects provides a precise and objective measure for identifying imperfections in the lamination, thereby increasing detection accuracy.

According to an example embodiment, the method further comprises removing excess fluid on the surface of the laminated molded fibrous pulp product before visually inspecting the product. Removing excess fluid before inspection enhances image clarity, preventing liquid from distorting the visual analysis or obscuring defects. The step of removing excess fluid thereby ensures that the inspection process focuses solely on defects in the lamination, leading to more accurate detection and fewer false readings.

According to an example embodiment, the method further comprises depositing the liquid on the surface of the laminated molded fibrous pulp product and maintaining the liquid on the surface for a time period of at least 30 seconds before visually inspecting the product. Allowing the liquid to remain on the surface for at least 30 seconds provides time for the liquid to penetrate the fibrous pulp product through defects in the lamination such as cracks or pinholes. It should be noted that the required time for achieving sufficient absorption of the liquid in the fibrous pulp product may depend on properties of both the product and the liquid, as well as on the nature of the defect. A suitable soaking time is thereby preferably determined for each specific implementation.

According to an example embodiment the method further comprises adjusting at least one parameter of the lamination process based on the detected defect, wherein lamination parameters include lamination pressure, lamination temperature, and lamination speed. By enabling real-time adjustments to lamination parameters-such as pressure, temperature, and speed-based on detected defects, dynamic control over the production process is provided which in turn allows for real-time correction of issues in order to reduce the recurrence of similar defects and improving overall product quality. By automating adjustments to the lamination process, the method enhances production efficiency, minimizing downtime and waste, thereby also lowering operational costs.

Further effects and features of the second aspect of the invention are largely analogous to those described above in connection with the first aspect of the invention.

Further features of, and advantages with, the present invention will become apparent when studying the appended claims and the following description. The skilled person realizes that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 is a block diagram schematically illustrating a defect detection system for a compression molding tool according to an example embodiment;
Fig. 2 schematically illustrates a defect detection system according to an example embodiment;
Fig. 3 schematically illustrates defects in a fibrous pulp product manufactured by a compression molding tool;
Fig. 4 is a block diagram schematically illustrating a defect detection system for a compression molding tool according to an example embodiment;
Fig. 5 is a flow chart outlining steps of a method of detecting defects in a laminated molded fibrous pulp product according to an example embodiment; and
Fig. 6 is a flow chart outlining steps of a method of detecting defects in a laminated molded fibrous pulp product according to an example embodiment.

### Detailed Description of Example Embodiments

In the present detailed description, various aspects and embodiments of the present invention are mainly described with reference to a defect detection system integrated in a production line for manufacturing a fibrous pulp tray suitable for food packaging. However, the described defect detection system may equally well be implemented in production lines for other types of fibrous pulp products.

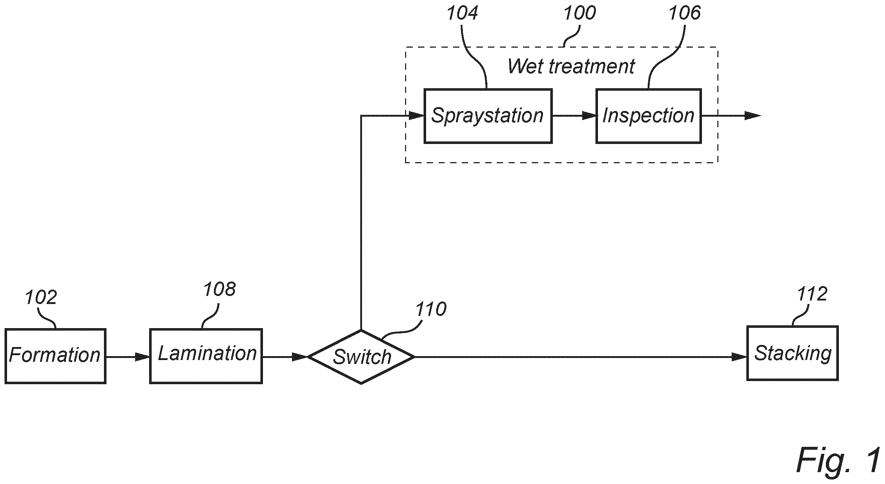

Fig. 1 is a block diagram schematically illustrating a defect detection system 100 for a compression molding tool 102. In particular, Fig. 1 illustrates the defect detection system 100 as being part of the production line for manufacturing a fibrous pulp product, where the production line comprises a compression molding tool 102, a lamination station 108 and a switch 110 for controlling if laminated products are transported to the defect detection system 100 or to a stacking station 112.

The defect detection system 100 illustrated in Fig. 1 comprises a wet treatment station 104 configured to receive a laminated molded fibrous pulp product from the compression molding tool 102, where the wet treatment station 104 is configured to deposit a liquid on a laminated surface of the product. The product is subsequently transported to an inspection station 106 configured to receive the product from the wet treatment station 104, the inspection station 106 further being configured to acquire an image of the product, and to automatically analyze the acquired image to detect a defect in a lamination layer of the product.

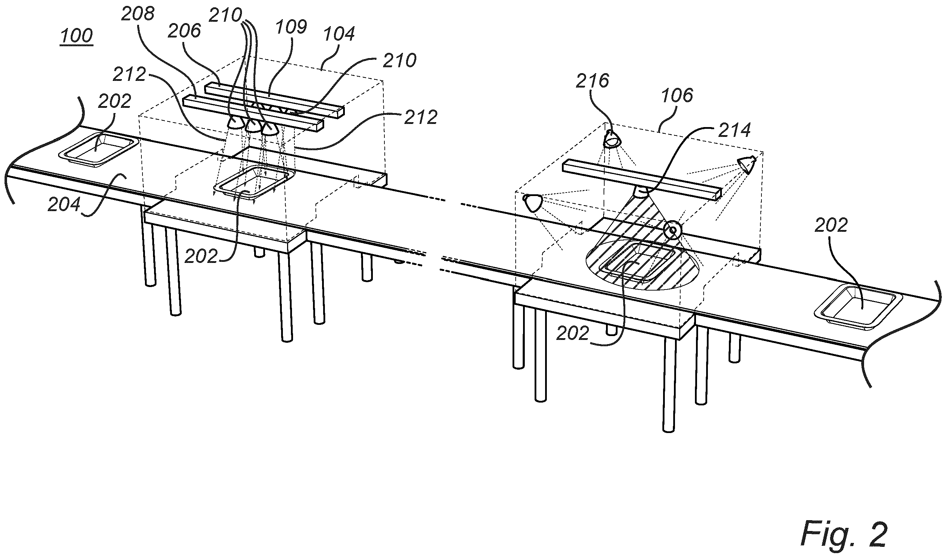

Fig. 2 schematically illustrates the defect detection system 100 in further detail. Laminated molded fibrous pulp products 202 in the form of trays 202 are transported on a first conveyor belt 204 from the lamination station to the wet treatment station 104. Even though the illustrated example shows one tray 202 at the time in the wet treatment station 104, the system 100 is preferably configured to handle a plurality of products in parallel to improve the throughout and to be able to analyze a larger sample of products, providing a better statistical basis for the defect analysis.

The wet treatment station 104 comprises a liquid dispensing system 206 with pipes 208 equipped with nozzles 210 configured to spray a liquid 212 onto the tray 202. Once the tray or trays 202 are located in the wet treatment station 104, the liquid is sprayed onto the tray to fully cover a laminated upper surface of the tray 202. After deposition of the liquid, a certain time is allowed to pass before the tray 202 is transported to the inspection station in order for the fluid to penetrate any defects in the lamination and to be absorbed by the fibrous pulp product. The soaking time may for example be somewhere in the range of 30 seconds to five minutes. In a practical implementation, the required soaking time for enhancing the visibility of defects can be assumed to depend on a number of parameters such as lamination type and thickness, the liquid used, properties of the fibrous pulp product etc. The skilled person can readily determine an appropriate soaking time for a given implementation based on empirical testing.

After soaking, the tray 202 is transported to the inspection station 106 which at least comprises a camera 214 and preferably also suitable an illumination arrangement, here illustrated as light sources 216 arranged in corners of the inspection station 106 to provide sufficient illumination of the tray 202. The camera 214 is part of an automated camera system which may employ imaging technologies such as infrared, visible light, UV, or a combination thereof.

Image analysis for detecting defects in laminated molded fibrous pulp products can use several techniques. One common method is contrast-based analysis, where differences in contrast between the normal surface and defective areas are measured. When the contrast exceeds a predefined threshold, defects like pinholes or irregularities are identified. Edge detection algorithms can also be employed to highlight sharp transitions in brightness or texture, making it easier to detect cracks or areas where the lamination is compromised. Additionally, pattern recognition techniques, such as machine learning or template matching, can be used to identify known defect patterns by comparing real-time images to examples of typical flaws. Thresholding and segmentation further aid in dividing the image into regions based on pixel intensity, allowing the system to flag areas where uniformity is disrupted, which could indicate a defect.

The image analysis for defect detection can be carried out on a computer system designed to run dedicated image processing software. This system typically consists of processing circuitry (which may include one or more processors or control units), memory, and a system bus that facilitates communication between system components, such as the memory and the processing circuitry. The processing circuitry is responsible for performing data or signal processing and executing computer code stored in memory. It may be composed of hardware components such as a general-purpose processor, application-specific processors, Digital Signal Processors (DSPs), Application-Specific Integrated Circuits (ASICs), Field Programmable Gate Arrays (FPGAs), or other programmable logic devices. It may also include discrete gate or transistor logic, discrete hardware components, or a combination of such elements. The system can be designed to operate with distributed processing components or distributed computers working together to handle processing tasks. Additionally, the processing circuitry contains computer-executable code that controls the operations of the system to perform the image analysis and other functions required for detecting defects.

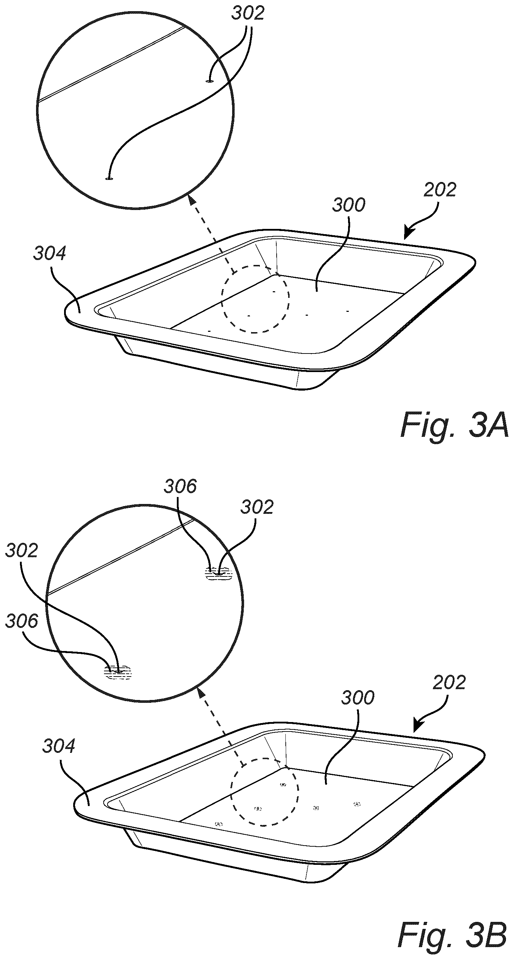

Figs. 3A-B schematically illustrates a tray 202 before (Fig. 3A) and after (Fig. 3B) a liquid has been deposited on the laminated surface 300 of the tray 202. For food containers, common laminations include Polyethylene (PE), which provides moisture and grease resistance, making it suitable for both hot and cold food storage, and Polypropylene (PP), having a high heat resistance, allowing containers to withstand microwave temperatures. Polylactic Acid (PLA) offers a biodegradable alternative, suitable for compostable packaging. Other options include aluminum foil for strong barrier properties, wax coatings for grease resistance, EVOH for oxygen barriers to extend shelf life, and paper-based laminations for structural support and recyclability. That the lamination is referred to as a lamination layer does not exclude that the lamination may consist of several layers or sublayers, of either the same or in the form of a combination of different lamination materials.

Fig. 3A schematically illustrates a tray 202 comprising a number of defects 302 in the form of pinholes, i.e. small holes in the lamination layer 304. A liquid is deposited onto the lamination layer as illustrated in Fig. 2, and the liquid is preferably a colored low-viscosity liquid. A low-viscosity liquid is one that flows more easily than water, with water at room temperature (RT) having a viscosity of approximately 1 mPa·s. Examples such as acetone has a viscosity of about 0.32 mPa·s at 25°C, and methylated spirits (a mixture of ethanol and methanol) which may have a viscosity of around 0.6 mPa·s at RT, allowing it to penetrate small surface defects quickly and evaporate without leaving much residue. Several different low-viscosity liquids could be used in applications like defect detection, where rapid spreading and even coverage is desirable for revealing small surface imperfections.

The use of a colored liquid enhances contrast, making it easier to detect defects on laminated surfaces. The difference in color intensity between the defect location and the surrounding material allows the automated inspection systems to more effectively identify defects. Fluorescent dyes can also be used to further improve detection, especially under UV light, by making defects stand out clearly. To color low-viscosity liquids used in defect detection, several types of colorants can be applied depending on the properties of the liquid and the desired contrast. Dyes such as water-soluble dyes can be used with liquids like water or methylated spirits. Examples include food dyes, aniline dyes, and acid dyes. For nonpolar liquids like hexane, oil-soluble dyes can be used. It is also possible to use pigments or fluorescent dyes.

Fig. 3B schematically illustrates the tray 202 after soaking, i.e. after the liquid has been allowed to penetrate the defects 302 and to be absorbed by the fiber material. After absorption of a colored liquid, the defects 302 can be identified by a colored region 306 surrounding the defect, thereby facilitating visual detection of the defect 302. In examples where a non-colored liquid is used, the defect can be identified by a difference in contrast between the area portion 306 where the liquid has been absorbed and an adjacent area.

Identified defects can then be characterized to classify and possibly determine a cause for the defect. A method of characterizing defects may include comparing identified defects with predetermined definitions of defects stored in a database.

A predetermined definition of a defect may include size-based defects, such as pinholes or cracks exceeding a specific threshold size, and contrast-based defects, where areas of the surface show a significant contrast difference compared to the surrounding material. A defect may also be defined as a shape or pattern irregularity, such as uneven edges or deviations in surface texture, and material inconsistencies, such as variations in surface roughness or density. Additionally, the definition of a defect can account for location-specific defects, where flaws in critical areas, such as sealing edges or corners, are considered more serious.

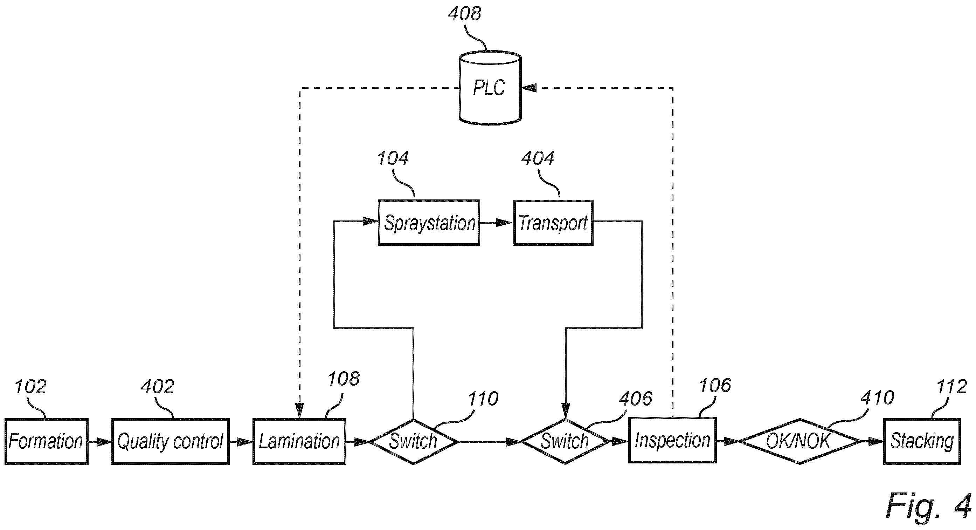

Fig. 4 is a block diagram illustrating integration of the defect detection system 100 in a compression molding manufacturing line 400. The manufacturing line comprises a compression molding tool 102 followed by a first quality control station 402 which is configured to detect defects in a molded fibrous pulp product after molding but before the product is transported to the lamination station 108. After the lamination station 108, a first switch 110 controls if products are to be provided to the wet treatment station 104 where a separate conveyor belt 404 or the like may transport the products back to the main manufacturing line. A second switch 406 directs products from the lamination station 108 or from the wet treatment station 104 to the inspection station 106 where the product is controlled for defects.

The inspection station 106 is advantageously connected to the lamination station 108 via a PLC (programmable logic controller) or similar circuitry where the results of the defect detection system are used to control properties of the lamination station 108. Depending on the nature and frequency of detected defects, parameters such as temperature, vacuum, speed etc. of the lamination station 108 can be automatically controlled to reduce the occurrence of defects.

From the inspection station 106, the products are transported to a station 410 where rejected products can be discarded and where approved products are transported further to a stacking station 112. It is also possible to select that all products which have been subjected to the wet treatment are discarded.

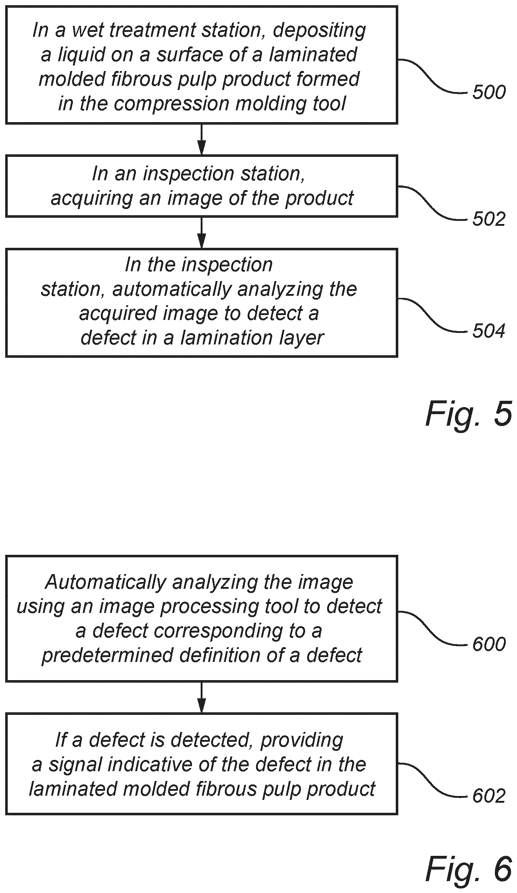

Fig. 5 is a flow chart outlining steps of a method of detecting defects in a laminated molded fibrous pulp product formed in a compression molding tool 102 according to an example embodiment. The method comprises: in a wet treatment station 104, depositing 500 a liquid on a surface of a laminated molded fibrous pulp product formed in the compression molding tool 102; and in an inspection station 106, acquiring 502 an image of the product, and automatically analyzing 504 the acquired image to detect a defect in the lamination.

Fig. 6 is a flow chart outlining further steps of a method of detecting defects in a laminated molded fibrous pulp product formed in a compression molding tool 102 according to an example embodiment. The method may comprise automatically analyzing 600 the acquired image using an image processing tool to detect a defect corresponding to a predetermined definition of a defect; and if a defect is detected, providing 602 a signal indicative of the defect in the laminated molded fibrous pulp product.

Even though the invention has been described with reference to specific exemplifying embodiments thereof, many different alterations, modifications and the like will become apparent for those skilled in the art. Also, it should be noted that parts of the described tool and method may be omitted, interchanged or arranged in various ways, the tool and method yet being able to perform the functionality of the present invention.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A defect detection system (100) for a compression molding tool (102), the system comprising:
a wet treatment station (104) configured to receive a laminated molded fibrous pulp product (202) from the compression molding tool, the wet treatment station being configured to deposit a liquid on a laminated surface of the product; and
an inspection station (106) configured to receive the product from the wet treatment station, the inspection station being configured to acquire an image of the product, and to automatically analyze the acquired image to detect a defect in a lamination layer of the product.

2. The defect detection system according to claim 1, wherein the inspection station is configured to detect a pinhole defect in the lamination layer of the product.

3. The defect detection system according to claim 1 or 2, wherein the wet treatment station is configured to deposit a colored liquid.

4. The defect detection system according to any one of the preceding claims, wherein the wet treatment station is configured to deposit a liquid having a viscosity lower than the viscosity of water.

5. The defect detection system according to any one of the preceding claims, wherein the wet treatment station is configured to deposit a methylated spirit.

6. The defect detection system according to any one of the preceding claims, wherein the wet treatment station comprises a spray dispenser configured to spray the liquid on a laminated surface of the product.

7. The defect detection system according to claim 6, wherein the spray dispenser is configured to spray the liquid on an entire laminated area of the product.

8. The defect detection system according to any one of the preceding claims, wherein the inspection station is configured to communicate information indicative of properties of at least one detected defect in a laminated molded fibrous pulp product to a lamination station of the compression molding tool.

9. Method of detecting defects in a laminated molded fibrous pulp product formed in a compression molding tool (102), the method comprising:
in a wet treatment station (104), depositing (500) a liquid on a surface of a laminated molded fibrous pulp product formed in the compression molding tool; and
in an inspection station (106), acquiring (502) an image of the product, and automatically analyzing (504) the acquired image to detect a defect in a lamination layer of the product.

10. The method according to claim 9, further comprising:
automatically analyzing (600) the acquired image using an image processing tool to detect a defect corresponding to a predetermined definition of a defect; and
if a defect is detected, providing (602) a signal indicative of the defect in the laminated molded fibrous pulp product.

11. The method according to claim 10, wherein a defect is defined as an area exhibiting a contrast difference between the laminated surface and a defect area that exceeds a predetermined contrast threshold.

12. The method according to any one of claims 9 to 11, further comprising removing excess fluid on the surface of the laminated molded fibrous pulp product before visually inspecting the product.

13. The method according to any one of claims 9 to 12, wherein depositing the liquid on the surface of the laminated molded fibrous pulp product further comprises maintaining the liquid on the surface for a time period of at least 30 seconds before visually inspecting the product.

14. The method according to any one of claims 9 to 13, wherein depositing the liquid on a surface of a laminated molded fibrous pulp product comprises spraying the liquid.

15. The method according to any one of claims 9 to 14, further comprising adjusting at least one parameter of the lamination process based on the detected defect, wherein lamination parameters include lamination pressure, lamination temperature, and lamination speed.
